# FASCICULE DE BREVET EUROPEEN

(11) **EP 3 656 636 B1**
(45) Date de publication et mention de la délivrance du brevet: **02.11.2022**
(21) Numéro de dépôt: 19210560.9
(22) Date de dépôt: 21.11.2019
(51) Int. Cl.: B61D 37/00, B60N 3/00, B64D 11/00, B60R 11/00

(54) **MOBILIER D'ÉQUIPEMENT DE CABINE DE VÉHICULE FERROVIAIRE**
MOBILIAR ZUR AUSRÜSTUNG EINER SCHIENENFAHRZEUGKABINE
FURNITURE FOR EQUIPPING A RAILWAY VEHICLE CABIN

(30) Priorité: 21.11.2018 FR 1871654
(43) Date de publication de la demande: 27.05.2020
(73) Titulaire: SpeedInnov, 75008 Paris (FR)
(72) Inventeur: LANGLOIS, Francis, 59310 Faumont (FR)
(74) Mandataire: Lavoix

(56) Documents cités:
- FR-A1- 2 999 394
- FR-A1- 3 001 690
- KR-A- 20140 069 892
- TW-A- 201 340 915
- US-A1- 2015 291 073

## Description

La présente invention concerne un mobilier d'équipement de compartiment de véhicule ferroviaire selon le préambule de la revendication 1.

Les véhicules ferroviaires destinés à accueillir des voyageurs comprennent un grand nombre d'aménagements de compartiment destinés à augmenter leur confort d'utilisation. Il est notamment courant de munir les sièges passagers de mobiliers comprenant des tablettes rabattables, qui permettent de déposer des objets, sans encombrer l'espace lorsqu'elles ne sont pas utilisées.

Il est connu de munir ces tablettes d'un support déployable lorsque la tablette est en position repliée, destiné à recevoir un équipement électronique tel qu'un téléphone portable ou une tablette numérique, afin de permettre à un voyageur de visionner du contenu tout en conservant un confort maximal. Un tel support est par exemple décrit dans le document FR 3 001 690.

Un autre exemple de mobilier de compartiment est décrit dans le document FR 2 999 394 A1.

Cependant, ces mobiliers ne donnent pas entière satisfaction. En effet, leur conception complexe augmente l'encombrement associé au mobilier ainsi que la fragilité face aux accidents et aux actes de malveillance.

Un but de l'invention est ainsi de fournir un mobilier d'intérieur de véhicule ferroviaire présentant une ergonomie améliorée et une bonne durabilité, afin d'augmenter le confort et la durée d'utilisation.

A cet effet, l'invention a pour objet un mobilier d'équipement de compartiment de véhicule ferroviaire selon la revendication 1.

Un tel mobilier présente une architecture simplifiée et un nombre de parties mobiles réduit, ce qui lui permet d'être plus résistant et plus simple à produire, tout en présentant un encombrement réduit et donc une meilleure ergonomie.

Selon des modes de réalisation particuliers, le mobilier selon l'invention présente l'une ou plusieurs des caractéristiques des revendications 2 à 9, prise(s) isolément ou selon toute combinaison techniquement réalisable.

L'invention a également pour objet une voiture de véhicule ferroviaire selon la revendication 10.

L'invention sera mieux comprise à la lecture de la description qui va suivre, donnée uniquement à titre d'exemple et faite en se référant aux dessins annexés, parmi lesquels :
- [Fig 1] la figure 1 est une vue en perspective d'un mobilier selon un exemple de mode de réalisation de l'invention ; et
- [Fig 2] la figure 2 est une vue en coupe transversale du mobilier de la figure 1.

La description qui suit est faite en référence à une direction longitudinale X-X', une direction transversale Y-Y' orthogonale à la direction longitudinale X-X', et une direction d'élévation Z-Z' orthogonale aux directions longitudinale X-X' et transversale Y-Y'.

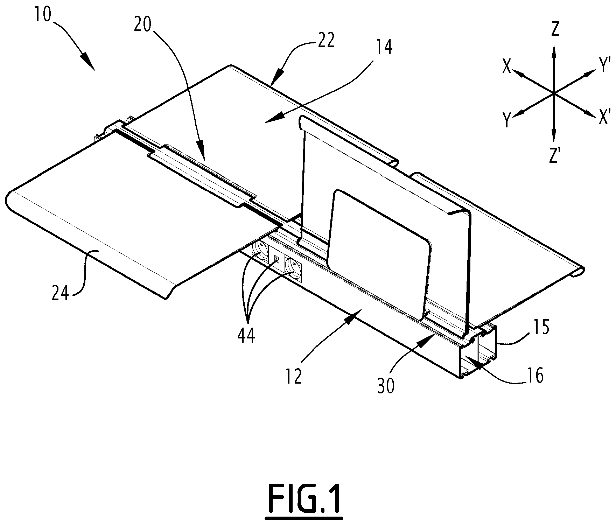

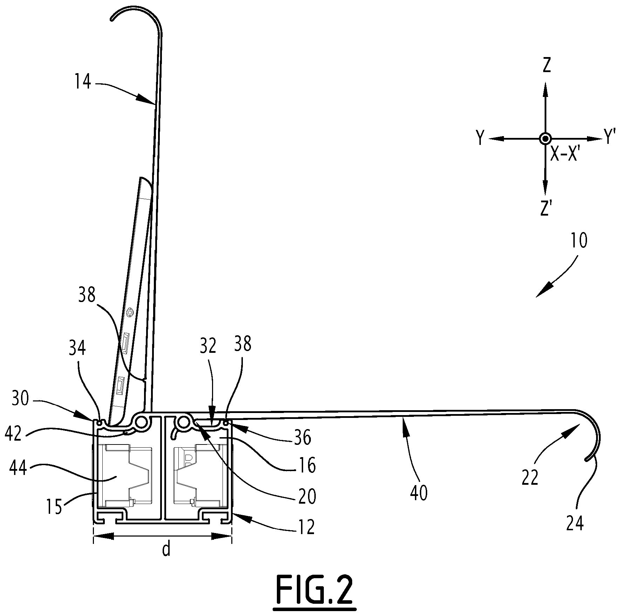

Un mobilier 10 selon un exemple de mode de réalisation est représenté sur les figures 1 et 2. Ce mobilier 10 comprend une console 12 et au moins une tablette 14 rabattable, de préférence plusieurs tablettes 14. Le mobilier 10 est destiné à être installé dans un compartiment d'un véhicule ferroviaire comprenant des sièges (non représentés), chaque tablette 14 étant disposée en face d'un des sièges afin de pouvoir être utilisée par un passager assis sur le siège correspondant.

Dans l'exemple représenté, le mobilier 10 comprend quatre tablettes 14 agencées pour faire face à quatre sièges disposés selon un agencement dit « en carré », c'est-à-dire en deux paires de sièges côte à côte selon la direction longitudinale X-X', en vis-vis l'une de l'autre selon la direction transversale Y-Y'. Les tablettes 14 en vis-à-vis sont agencées symétriquement par rapport à un plan médian parallèle à la direction longitudinale X-X'.

La console 12 est un support structurel fixe, c'est-à-dire destiné à être fixé de manière sensiblement immobile au véhicule ferroviaire. La console 12 comprend une poutre métallique 15 supportée par un ou plusieurs pieds (non représentés), réalisée par exemple à partir d'un profilé en métal. La console 12 délimite un espace interne 16, qui est compartimenté dans l'exemple représenté sur les figures 1 et 2.

La console 12 présente une forme allongée selon la direction longitudinale X-X'. La console 12 présente avantageusement une étendue transversale, notée d sur la figure 2, mesurée selon la direction transversale Y-Y', inférieure à 150 mm, avantageusement inférieure à 110 mm.

Chaque tablette 14 présente une forme aplatie sensiblement rectangulaire et présente une extrémité proximale 20 et une extrémité distale 22 par rapport à la console 12. La tablette 14 présente ainsi une longueur, mesurée entre l'extrémité proximale et l'extrémité distale, et une largeur mesurée selon la direction longitudinale X-X', ainsi qu'une épaisseur, mesurée orthogonalement à la longueur et à la largeur.

Avantageusement, l'épaisseur de la tablette 14 est très inférieure à sa longueur et à sa largeur, et notamment inférieure à 10 mm, et mieux inférieure à 7 mm. La faible épaisseur de la tablette 14 réduit son encombrement et son poids.

La tablette 14 présente une partie repliée 24 au niveau de son extrémité distale 22, la partie repliée 24 présentant une section courbe, notamment en arc de cercle dans un plan orthogonal à la direction longitudinale X-X', comme représenté sur la figure 2.

L'extrémité repliée 24 confère une bonne préhension à l'extrémité distale de la tablette 14 et réduit les risques liés à la faible épaisseur de la tablette 14. En effet, en cas de choc d'un voyageur avec l'extrémité distale 22, par exemple lors d'un freinage d'urgence, la faible épaisseur de la tablette pourrait provoquer des blessures, qui sont évitées grâce à la partie arrondie 24 qui augmente significativement la surface de contact.

La tablette 14 est articulée sur la console 12 à son extrémité proximale 20, de manière mobile en rotation autour d'un axe d'articulation parallèle à la direction longitudinale X-X'. La tablette 14 est ainsi mobile entre une position relevée, dans laquelle la tablette 14 s'étend selon un plan sensiblement orthogonal à la direction transverse Y-Y', et une position abaissée dans laquelle la tablette 14 s'étend selon un plan sensiblement orthogonal à la direction d'élévation Z-Z'.

La console 12 comporte un rebord 30 s'étendant parallèlement à l'axe d'articulation, selon la direction longitudinale X-X'. Le rebord fait saillie depuis une surface supérieure 32 de la console 12, selon la direction d'élévation Z-Z'.

Le rebord 30 forme un support pour matériel électronique avec la tablette 14 en positior relevée. On entend par là que le rebord 30 et la tablette 14 en position relevée constituent un siège adapté pour supporter un matériel électronique de façon stable, en prévenant les glissements et la chute du matériel électronique. Le matériel électronique est reçu dans une position en permettant le visionnage et l'utilisation par le voyageur.

Le matériel électronique est par exemple une tablette électronique comme représenté sur les figures 1 et 2, ou un téléphone portable.

Le rebord 30 est en contact avec la tablette 14 en position abaissée, comme représenté sur la figure 2, afin de limiter la rotation de la tablette 14 au niveau de la position abaissée.

Avantageusement, le rebord 30 comprend une partie antichoc 34 destinée à venir en contact avec la tablette 14 en position abaissée afin d'amortir les chocs dus aux mouvements de la tablette 14 lors du passage en position abaissée.

Selon un mode de réalisation avantageux, le rebord 30 comporte, à son sommet, une gorge 36 s'étendant selon la direction longitudinale X-X', la gorge 36 contenant la partie antichoc 34. La partie antichoc 34 est par exemple un joint en caoutchouc inséré dans la gorge 36. La tablette 14 comporte alors une saillie 38 s'étendant depuis une surface inférieure 40 de la tablette 14, la saillie 38 étant agencée pour venir en contact avec la partie antichoc 34 en position abaissée. La disposition de la partie antichoc 34 dans la gorge 36 réduit l'usure subie par la partie antichoc 34 et les chances d'arrachage ou de décollement à l'utilisation, et prévient également les risques de dégradations.

Avantageusement, la tablette 14 comprend, à son extrémité proximale, une partie de retenue 42 s'étendant au-delà de l'axe d'articulation, dans l'espace interne 16 de la console 12. La partie de retenue 42 est destinée à coopérer avec la console 12 en position relevée, formant ainsi une butée empêchant le mouvement de rotation de la tablette 14 au-delà de la position relevée. Ceci permet d'empêcher deux tablettes 14 positionnées en vis-à-vis de se heurter lorsque les deux tablettes 14 sont passées en position relevée, et ainsi de prévenir une usure intempestive.

Avantageusement, la console 12 comprend au moins une prise de courant 44, positionnée de manière décalée par rapport à la tablette 14 selon la direction longitudinale X-X'. Dans le cas où le mobilier 10 comprend deux tablettes 14 voisines selon la direction longitudinale X-X', les prises de courant 44 sont disposées entre les deux tablettes 14 voisines.

Chaque prise de courant 44 est orientée sensiblement selon la direction transversale Y-Y', afin de faciliter l'accès à la prise de courant 44 par les voyageurs. Le positionnement des prises de courant 44 permet notamment de brancher un chargeur d'un matériel électronique reçu par le mobilier 10, pour recharger ce matériel électronique pendant son utilisation.

Avantageusement, les prises de courant 44 comprennent des prises de type secteur et des prises de type USB, afin de permettre la recharge de matériel électronique sans nécessiter d'adaptateur.

On notera que l'invention n'est pas limitée au mode de réalisation précédemment décrit, et pourrait présenter diverses variantes sans sortir du cadre des revendications.

## Revendications

1. Mobilier (10) d'équipement de compartiment de véhicule ferroviaire comprenant une console (12) structurelle fixe et au moins une tablette (14) présentant une extrémité proximale (20) et une extrémité distale (22) par rapport à la console (12), chaque tablette (14) étant articulée sur la console (12) par son extrémité proximale (20), de manière mobile en rotation autour d'un axe d'articulation, entre une position relevée et une position abaissée, **caractérisé en ce que** la console (12) comporte un rebord (30) s'étendant parallèlement à l'axe d'articulation, le rebord (30) formant un support pour matériel électronique avec la tablette (14) en position relevée.

2. Mobilier (10) selon la revendication 1, dans lequel la tablette (14) en position abaissée est en contact avec le rebord (30), et est ainsi supportée en partie par le rebord (30).

3. Mobilier (10) selon la revendication 2, dans lequel le rebord (30) fait saillie depuis la console (12), et comporte une partie antichoc (34) destinée à venir en contact avec la tablette (14) en position abaissée.

4. Mobilier (10) selon la revendication 3, dans lequel le rebord (30) comporte à son sommet une gorge (36) s'étendant parallèlement à l'axe d'articulation, la gorge (36) contenant la partie antichoc (34), la partie antichoc (34) étant de préférence destinée à venir en contact en position abaissée avec une saillie (38) s'étendant depuis une surface inférieure (40) de la tablette (14).

5. Mobilier (10) selon l'une quelconque des revendications 1 à 4, dans lequel la console (12) comprend au moins une prise de courant (44), chaque prise de courant (44) étant orientée selon une direction (Y-Y') sensiblement perpendiculaire à l'axe de rotation, chaque prise de courant (44) étant décalée par rapport à la tablette (14) selon une direction parallèle (X-X') à l'axe d'articulation.

6. Mobilier (10) selon l'une quelconque des revendications 1 à 5, dans lequel la tablette (14) comprend, à son extrémité proximale, une partie de retenue (42) s'étendant au-delà de l'axe d'articulation, la partie de retenue (42) étant destinée à coopérer avec la console (12) lorsque la tablette est en position relevée, formant ainsi une butée empêchant le mouvement de rotation de la tablette (14) au-delà de la position relevée.

7. Mobilier (10) selon l'une quelconque des revendications 1 à 6, comprenant au moins deux tablettes (14) agencées symétriquement par rapport à un plan médian parallèle aux axes de rotation des tablettes (14).

8. Mobilier (10) selon l'une quelconque des revendications 1 à 7, dans lequel la console (12) présente une étendue transversale (d), mesurée selon une direction d'étendue de la tablette (14) en position abaissée, inférieure ou égale à 150 mm, notamment inférieure ou égale à 110 mm.

9. Mobilier (10) selon l'une quelconque des revendications 1 à 8, dans laquelle la tablette (14) comporte une partie repliée (24) au niveau de son extrémité distale (22).

10. Voiture de véhicule ferroviaire comprenant une caisse définissant un compartiment, le compartiment comprenant des sièges et au moins un mobilier (10) selon l'une quelconque des revendications 1 à 9 disposé en regard d'au moins un des sièges.

## Patentansprüche

1. Möbel (10) zur Ausstattung eines Schienenfahrzeugabteils, umfassend eine feste strukturelle Konsole (12) und mindestens eine Ablage (14), die ein proximales Ende (20) und ein distales Ende (22) in Bezug auf die Konsole (12) aufweist, wobei jede Ablage (14) über ihr proximales Ende (20) an der Konsole (12) angelenkt ist, um um eine Gelenkachse zwischen einer angehobenen Position und einer abgesenkten Position drehbeweglich zu sein, **dadurch gekennzeichnet, dass** die Konsole (12) einen Rand (30) umfasst, der sich parallel zu der Gelenkachse erstreckt, wobei der Rand (30) mit der Ablage (14) in der angehobenen Position einen Träger für elektronisches Material bildet.

2. Möbel (10) nach Anspruch 1, wobei die Ablage (14) in der abgesenkten Position den Rand (30) berührt und somit teilweise von dem Rand (30) getragen wird.

3. Möbel (10) nach Anspruch 2, wobei der Rand (30) von der Konsole (12) hervorsteht und einen stoßdämpfenden Teil (34) umfasst, der dazu bestimmt ist, in der abgesenkten Position mit der Ablage (14) in Kontakt zu kommen.

4. Möbel (10) nach Anspruch 3, wobei der Rand (30) an seiner Oberseite eine Nut (36) umfasst, die sich parallel zu der Gelenkachse erstreckt, wobei die Nut (36) den stoßdämpfenden Teil (34) enthält, wobei der stoßdämpfende Teil (34) vorzugsweise dazu bestimmt ist, in der abgesenkten Position mit einem Vorsprung (38) in Kontakt zu kommen, der sich von einer unteren Fläche (40) der Ablage (14) erstreckt.

5. Möbel (10) nach einem der Ansprüche 1 bis 4, wobei die Konsole (12) mindestens eine Steckdose (44) umfasst, wobei jede Steckdose (44) in eine Richtung (Y-Y') ausgerichtet ist, die im Wesentlichen senkrecht zu der Drehachse ist, wobei jede Steckdose (44) in Bezug auf die Ablage (14) in einer Richtung parallel (X-X') zu der Gelenkachse versetzt ist.

6. Möbel (10) nach einem der Ansprüche 1 bis 5, wobei die Ablage (14) an ihrem proximalen Ende einen Halteabschnitt (42) umfasst, der sich über die Gelenkachse erstreckt, wobei der Halteabschnitt (42) dazu bestimmt ist, mit der Konsole (12) zusammenzuwirken, wenn die Ablage in der hochgeklappten Position ist, und somit einen Anschlag bildet, der die Drehbewegung der Ablage (14) über die hochgeklappte Position hinaus verhindert.

7. Möbel (10) nach einem der Ansprüche 1 bis 6, mit mindestens zwei Ablagen (14), die symmetrisch zu einer Mittelebene parallel zu den Drehachsen der Ablagen (14) angeordnet sind.

8. Möbel (10) nach einem der Ansprüche 1 bis 7, wobei die Konsole (12) eine Quererstreckung (d), gemessen entlang einer Erstreckungsrichtung der Ablage (14) in der abgesenkten Position, von weniger als oder gleich wie 150 mm, insbesondere weniger als oder gleich wie 110 mm, aufweist.

9. Möbel (10) nach einem der Ansprüche 1 bis 8, wobei die Ablage (14) an ihrem distalen Ende (22) einen gefalteten Abschnitt (24) umfasst.

10. Schienenfahrzeugwagen, umfassend einen Wagenkasten, der ein Abteil definiert, das Abteil umfassend Sitze und mindestens ein Möbel (10) nach einem der Ansprüche 1 bis 9, das gegenüber mindestens einem der Sitze angeordnet ist.

## Claims

1. A piece of furniture (10) for equipping a railway vehicle compartment, comprising a fixed structural bracket (12) and at least one shelf (14) having a proximal end (20) and a distal end (22) with respect to the bracket (12), each shelf (14) being articulated to the bracket (12) by its proximal end (20), in such a way as to be able to rotate about an articulation axis, between a raised position and a lowered position, **characterised in that** the bracket (12) comprises a flange (30) extending parallel to the articulation axis, the flange (30) forming a support for electronic equipment with the shelf (14) in the raised position.

2. The furniture (10) according to claim 1, wherein the shelf (14) in the lowered position is in contact with the flange (30), and is thus partly supported by the flange (30).

3. The furniture (10) according to claim 2, wherein the flange (30) protrudes from the bracket (12), and has an shock-absorbing portion (34) for contacting the shelf (14) in the lowered position.

4. The furniture (10) according to claim 3, wherein the flange (30) has at its top a groove (36) extending parallel to the hinge axis, the groove (36) containing the shock-absorbing portion (34), the shock-absorbing portion (34) preferably being intended to engage in a lowered position with a projection (38) extending from a lower surface (40) of the shelf (14).

5. The furniture (10) according to any one of claims 1 to 4, wherein the bracket (12) comprises at least one socket (44), each socket (44) being oriented in a direction (Y-Y') substantially perpendicular to the axis of rotation, each socket (44) being offset from the shelf (14) in a direction parallel (X-X') to the axis of articulation.

6. The furniture (10) according to any one of claims 1 to 5, wherein the shelf (14) comprises, at its proximal end, a retaining portion (42) extending beyond the hinge axis, the retaining portion (42) being intended to cooperate with the bracket (12) when the shelf is in a raised position, thereby forming a stop preventing rotational movement of the shelf (14) beyond the raised position.

7. The furniture (10) according to any of claims 1 to 6, comprising at least two shelves (14) arranged symmetrically with respect to a median plane parallel to the axes of rotation of the shelves (14).

8. The furniture (10) according to any one of claims 1 to 7, wherein the bracket (12) has a transverse extent (d), measured along a direction of extent of the shelf (14) in the lowered position, of less than or equal to 150 mm, in particular less than or equal to 110 mm.

9. The furniture (10) according to any of claims 1 to 8, wherein the shelf (14) has a folded portion (24) at its distal end (22).

10. A railway vehicle car comprising a body defining a compartment, the compartment comprising seats and at least one piece of furniture (10) according to any one of claims 1 to 9 disposed opposite at least one of the seats.
